Europäisches Patentamt

European Patent Office

Office européen des brevets

(19)

(11) Veröffentlichungsnummer: **0 067 280**
**B1**

(12) **EUROPÄISCHE PATENTSCHRIFT**

(45) Veröffentlichungstag der Patentschrift:
**21.11.84**

(21) Anmeldenummer: **82102921.2**

(22) Anmeldetag: **06.04.82**

(51) Int. Cl.³: **G 03 B 21/58**

(54) **Lichtbildwand.**

(30) Priorität: **15.04.81 DE 3115177**

(43) Veröffentlichungstag der Anmeldung:
**22.12.82 Patentblatt 82/51**

(45) Bekanntmachung des Hinweises auf die Patenterteilung:
**21.11.84 Patentblatt 84/47**

(84) Benannte Vertragsstaaten:
**BE FR GB IT LU NL SE**

(56) Entgegenhaltungen:
**US - A - 2 696 249**
**US - A - 3 036 628**
**US - A - 3 289 737**

(73) Patentinhaber: **REFLECTA GMBH FOTO FILM PROJEKTION, Berlichingenstrasse 9, D-8540 Schwabach (DE)**

(72) Erfinder: **Weinberg, Ulli, An der Gredl, 6, D-8542 Roth (DE)**

(74) Vertreter: **LOUIS, PÖHLAU, LOHRENTZ & SEGETH, Kesslerplatz 1, D-8500 Nürnberg (DE)**

## Beschreibung

Die Erfindung betrifft eine Lichtbildwand mit einer unter der Kraft einer Aufwickelfeder stehenden Aufwickelrolle für die Lichtbildwand, die in einem rohrförmigen Gehäuse gelagert ist, einem mit der Aufwickelrolle drehfest verbundenen und von außen betätigbaren Drehknopf an einem Gehäuseende zum Nachspannen der ausgezogenen Lichtbildwand und mit einer Abschlußleiste an dem der Aufwickelrolle entgegengesetzten Ende der Lichtbildwand.

Lichtbildwände dieser Art sind bekannt und auf dem Markt. Da die Kraft der Aufwickelfeder für das automatische Aufrollen der Lichtbildwand aber nicht ausreicht, um die ausgezogene Lichtbildwand absolut eben zu halten, ist der Drehknopf vorgesehen, mit dem die ausgezogene Lichtbildwand von Hand nachgespannt werden kann.

Die bekannten Lichtbildwände mit automatischer Aufwicklung haben den Nachteil, daß in ihrem aufgerollten Zustand sich die Austrittsstelle der Lichtbildwand auf der Aufwickelrolle unter der Kraft der Aufwickelfeder auf die darüberliegenden Lagen abdrückt, wodurch Querstreifen auf der ausgezogenen Lichtbildwand erscheinen, die sich bei der Vorführung störend bemerkbar machen.

Der Erfindung liegt nun die Aufgabe zugrunde, hier Abhilfe zu machen.

Diese Aufgabe wird bei einer Lichtbildwand der eingangs genannten Art dadurch gelöst, daß im Gehäuse ein von der Abschlußleiste bei voll aufgewickelter Lichtbildwand gegen die Kraft einer Feder beaufschlagtes Tastelement radial verschiebbar gelagert ist, daß ein durch das Tastelement verschiebbares Rastelement vorgesehen ist und daß mit dem Rastelement bei Beaufschlagung des Tastelements ein mit dem Drehknopf drehfest verbundenes Gegenrastelement zur Arretierung der Aufwickelrolle in Aufwickelrichtung zusammenwirkt.

Bei der erfindungsgemäßen Lichtbildwand wird nach der automatischen Aufwicklung die durch die Aufwickelfeder auf die Lichtbildwand ausgeübte Spannung gelöst, indem der Drehknopf zum Nachspannen der Lichtbildwand in der ausgezogenen Stellung, soweit erforderlich, entgegen der Aufwickelrichtung gedreht wird. Auf diese Weise lockern sich die Lagen der Lichtbildwand, so daß die Austrittsstelle der Lichtbildwand auf der Aufwickelrolle nicht mehr auf die erste und die weiteren darüberliegenden Lagen abdrückt. Durch Beaufschlagung des Tastelements mit der Abschlußleiste bei aufgewickelter Lichtbildwand wird für eine Arretierung der Aufwickelrolle in Aufwickelrichtung gesorgt, so daß nach der Freigabe des Drehknopfes nach dem Lösen der Spannung der Lichtbildwand die Aufwickelfeder nicht erneut die aufgewickelte Lichtbildwand strammziehen kann.

Geht man von einer Lichtbildwand aus, bei der der Drehknopf starr mit einem innerhalb des Gehäuses befindlichen Flansch verbunden, axial verschiebbar und über axial ineinandergreifende Arretierungselemente mit dem Gehäuse in Drehrichtung verriegelbar ist, und ferner von einer Feder vom Gehäuseende aus dem Verriegelungseingriff gedrückt wird, so ist vorzugsweise das Rastelement eine Rastnase, die bei unbeaufschlagtem Tastelement sich radial außerhalb des Umfangs des Flansches und bei Beaufschlagung des Tastelements sich radial innerhalb des Umfangs des Flansches befindet, das Gegenrastelement eine die Rastnase bei Arretierung aufnehmende radiale Ausnehmung am Umfang des Flansches, der bei axial nicht beaufschlagtem Drehknopf in der radialen Verschiebungsstrecke der Rastnase liegt, die Rastnase und/oder der Flansch für ein Vorbeiführen der Rastnase auf der der Aufwickelrolle abgewandten Außenseite des Flansches bei Beaufschlagung des Tastelements durch die Abschlußleiste in all den Drehstellungen des Flansches, in denen die Ausnehmung nicht in der Verschiebungsstrecke der Rastnase liegt, radial abgeschrägt und sind entweder die Rastnase auf der beim Aufwickeln mit der einen Kante der Ausnehmung in Anlage kommenden Seite oder die beim Abwickeln mit der Rastnase in Anlage kommende Kante der Ausnehmung in Umfangsrichtung für eine Drehbewegung entgegen der Aufwickelrichtung abgeschrägt.

Dabei ist zweckmäßigerweise ein Schieber auf der Innenseite des den Drehknopf aufweisenden axialen Gehäuseendes radial verschiebbar geführt und weist an einem Ende das Tastelement und am anderen Ende einen Schenkel auf, der durch die das Tastelement beaufschlagende Feder gegen den kreisförmigen Umfang des Flansches gedrückt wird, wobei die Rastnase auf der Seite des Tastelements am Schieber vorgesehen ist.

Um in jedem Falle eine ausreichende Beaufschlagung des Tastelementes sicherzustellen, ist es ferner von Vorteil, wenn am rohrförmigen Gehäuse eine Verriegelungseinrichtung zum Arretieren der Abschlußleiste am Gehäuse bei aufgewickelter Lichtbildwand vorgesehen ist.

Weitere Vorteile, Merkmale und Einzelheiten der Erfindung ergeben sich aus der nachstehenden, anhand der Zeichnung erfolgenden Beschreibung eines bevorzugten Ausführungsbeispiels. In der Zeichnung stellt dar

Fig. 1 schematisch einen Schnitt durch die erfindungsgemäße Lichtbildwand im aufgerollten Zustand,

Fig. 2 eine Draufsicht auf die Lichtbildwand der Fig. 1 im Bereich der Verriegelungseinrichtung,

Fig. 3 einen Schnitt in Längsrichtung der Lichtbildwand im Bereich des Drehknopfes,

Fig. 4 Rastnase und Ausnehmung im Flansch zur Arretierung der Aufwickelrolle gemäß der Erfindung, in Draufsicht und

Fig. 5 und 6 verschiedene Stellungen der Rastnase und der Ausnehmung zur Arretierung der Aufwickelrolle gemäß der Erfindung in Seitenansichten.

In einem rohrförmigen Gehäuse 10 befindet sich eine Aufwickelrolle 12, aus der durch einen Schlitz die Lichtbildwand 14 austritt. Die Lichtbildwand 14 wird dabei durch einen Keder 16 in der Aufwickelrolle festgehalten. Bei den bekannten Lichtbildwänden würde sich die Austrittsstelle 18 der Lichtbildwand auf der Aufwickelrolle auf den darüberliegenden Lagen abdrücken.

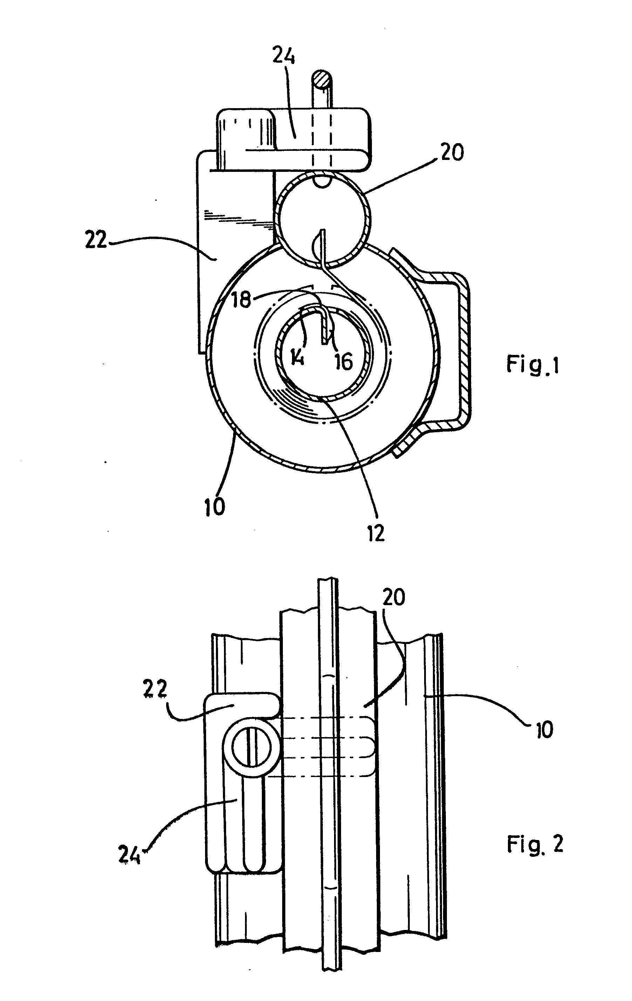

Das andere Ende der Lichtbildwand 14 ist an einer rohrförmigen Abschlußleiste 20 befestigt, die bei aufgewickelter Lichtbildwand teilweise in das rohrförmige Gehäuse 10 eingreifend auf der Austrittsöffnung desselben für die Lichtbildwand aufsitzt. Mit Hilfe einer Verriegelungseinrichtung bestehend aus einem am rohrförmigen Gehäuse 10 befestigten Halter 22 und einem daran befestigten und in und aus der Auszugsbahn der Lichtbildwand verschwenkbaren Hebel 24 kann die Abschlußleiste 20 in der Austrittsöffnung des rohrförmigen Gehäuses 10 für die Lichtbildwand gesichert werden, wie dies aus den Fig. 1 und 2 hervorgeht, wobei in Fig. 2 die ausgezogene Stellung des Hebels 24 diejenige ist, in der die Lichtbildwand für die Vorführung ausgezogen werden kann, während die gestrichelt gezeigte Stellung die auch in Fig. 1 dargestellte Verriegelungsstellung ist.

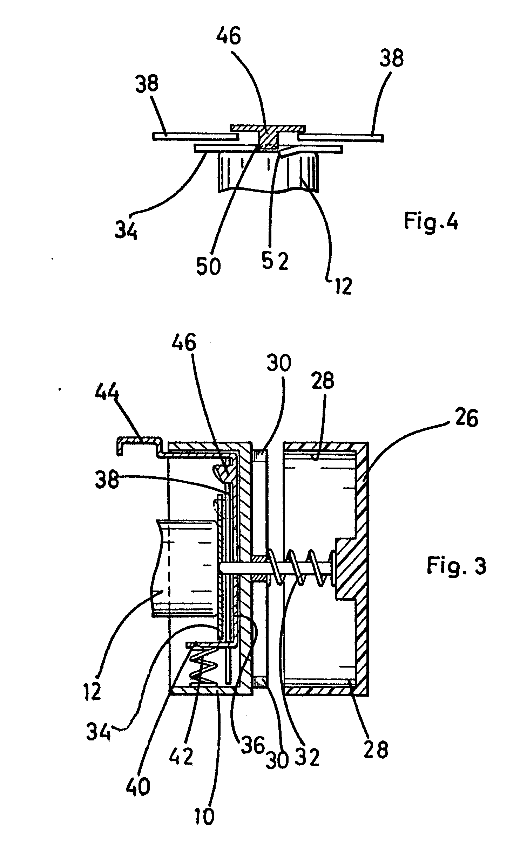

Es wird nun insbesondere Bezug auf Fig. 3 genommen. An einem Ende des rohrförmigen Gehäuses 10 ist ein Drehknopf 26 vorgesehen, der mit der Aufwickelrolle 12 drehfest verbunden ist. Der Drehknopf 26 ist topfförmig ausgebildet und weist auf der Innenseite seines Mantels axial verlaufende Arretierungselemente 28 auf, die mit Arretierungselementen 30 auf der Außenseite des Gehäuses 10 zusammenwirken. Die Anordnung ist dabei derart getroffen, daß die Arretierungselemente 28 und 30 mit Spiel in Drehrichtung axial ineinandergreifen, wenn der Drehknopf 26 entgegen der Kraft einer Feder 32 gegen das Ende des Gehäuses 10 gedrückt wird, und in Aufwickelrichtung die Aufwickelrolle 12 bei in der ausgezogenen Stellung nachgespannter Leinwand durch Reibschluß verriegeln. Die Kraft, mit der die Arretierungselemente 28, 30 aufgrund der Nachspannung gegeneinander gedrückt werden, sorgt nämlich auch für einen ausreichenden Reibschluß in axialer Richtung, der so groß ist, daß die Ausdrückkraft der Feder 32 überwunden wird. Ein Lösen dieser Verriegelung bzw. Arretierung tritt ein, wenn der Drehknopf zum Lösen des Reibschlusses in axialer Richtung entgegen der Aufwickelrichtung gedreht wird. Insoweit ist die Anordnung als Nachspanneinrichtung allgemein bekannt.

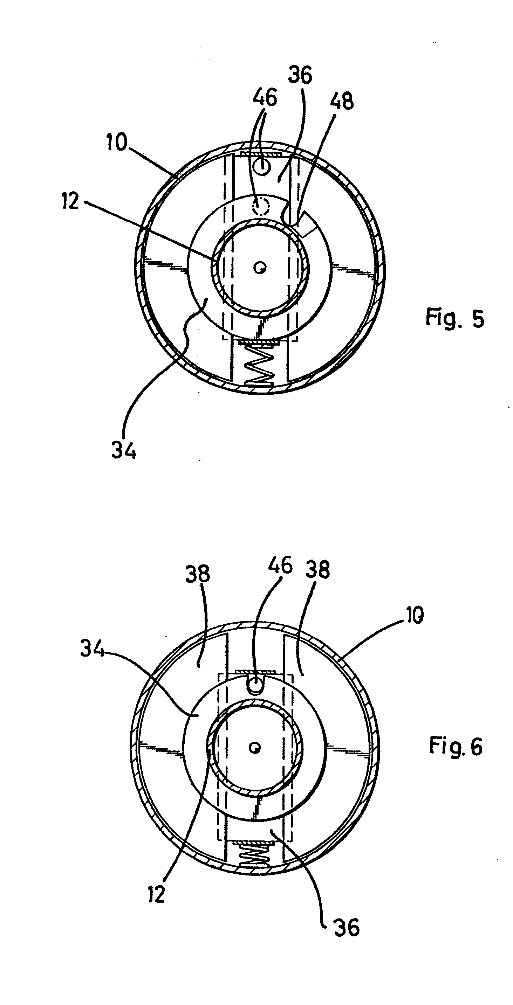

Wie auch aus den Fig. 5 und 6 hervorgeht, weist die Aufwickelrolle 12 innerhalb des Gehäuses 10 auf ihrem dem Drehknopf 26 zugewandten Ende einen kreisförmigen Flansch 34 auf. Ferner ist ein Schieber 36 mit Hilfe von zwei Abdeckplatten 38 auf der Innenseite des Gehäuses 10 zwischen dessen Stirnwandung und dem Flansch 34 der Aufwickelrolle 12 radial verschiebbar gelagert, wie dies aus den Fig. 3, 5 und 6 hervorgeht. Der Schieber weist dabei für den Durchtritt der Welle des Drehknopfes 26 einen Schlitz auf, wie dies aus Fig. 3 hervorgeht. Der Schieber 36 ist an seinen radialen Enden nach innen etwa parallel zur Achse der Aufwickelrolle abgewinkelt. Das untere abgewinkelte Ende, der Schenkel 40, wird dabei von einer Feder 42, die sich am Mantel des Gehäuses 10 abstützt, gegen den Flansch 34 der Aufwickelrolle 12 gedrückt bzw. wird das obere abgewinkelte Ende des Schiebers 36 gegen den Mantel des Gehäuses 10 gedrückt, wie dies aus den Fig. 3, 5 und 6 hervorgeht. Das obere abgewinkelte Ende des Schiebers 36 bildet dabei ein Tastelement 44, das in die in der aufgewickelten Stellung der Leinwand von der Abschlußleiste 20 verschlossene Austrittsöffnung für die Leinwand im Gehäuse 10 ragt und von der Abschlußleiste 20 in der aufgewickelten Stellung der Leinwand, wie sie in Fig. 1 gezeigt ist, beaufschlagt und gegen die Kraft der Feder 42 nach unten gedrückt wird. Der Schieber 36 weist außerdem in seinem radial verlaufenden Teil auf der dem Schenkel 40 abgewandten Seite eine Rastnase 46 auf, die mit einer radialen Ausnehmung 48 im Flansch 34 zusammenwirkt. Der Flansch 34 der Aufwickelrolle 12 liegt bei axial unbeaufschlagtem Drehknopf 26 in der radialen Verschiebungsstrecke der Rastnase 46. Der Flansch 34 ist mit dem Drehknopf 26 über die Drehknopfwelle nicht nur in Drehrichtung, sondern auch in axialer Verschiebungsrichtung fest verbunden und damit natürlich axial verschieblich. Um bei einer axialen Beaufschlagung des Drehknopfes 26 eine axiale Verschiebung der gesamten Aufwickelrolle 12 zu vermeiden, kann eine entsprechende Kupplung (Zapfen in axialen Schlitzen) vorgesehen sein. Das freie Ende des Zapfens 46 ist in radialer Richtung abgeschrägt, wie dies aus Fig. 3 ersichtlich ist. Wenn also das Tastelement durch die Abschlußleiste 20 nach unten beaufschlagt wird und die Ausnehmung 48 im Flansch 34 nicht dem Zapfen 46 gegenübersteht, so ist eine radiale Verschiebung des Zapfens 46 nach unten trotzdem möglich, da der Umfang des Flansches 34 an der radialen Abschrägung des Zapfens 46 abgleiten und dabei der Flansch zusammen mit dem Drehknopf 26 in Fig. 3 ein wenig nach links gedrückt wird. Die Arretierungselemente 28 und 30 kommen aber dabei nicht in Eingriff. Somit kann in jeder Drehstellung der Aufwickelrolle 12 das Tastelement 44 durch die Abschlußleiste 20 nach unten beaufschlagt werden.

Anstatt die Rastnase 46 radial abzuschrägen, könnte natürlich auch der Flansch am Umfang in Fig. 3 nach links ein wenig umgebogen sein.

Befindet sich nun die Rastnase 46 innerhalb des Umfangs des Flansches 34 bei irgendeiner Drehstellung der Aufwickelrolle 12, bei der die Ausnehmung 48 nicht der Rastnase 46 gegenübersteht, also beispielsweise in der in Fig. 5 gestrichelt eingezeichneten Stellung, so kann der Drehknopf 26 entgegen der Kraft der Aufwickelfeder, die nicht gezeigt ist, gedreht werden, um die aufgewickelte Lichtbildwand zu lockern. Er wird dann automatisch in die Ausnehmung 48 gelangen. Die beim Aufwickeln mit der Rastnase 46 in Anlage kommende Kante 50 der Ausnehmung 48 ist dabei gerade ausgebildet, wie in Fig. 4 gezeigt. Auf diese Weise wird eine Arretierung der Aufwickelrolle in Aufwickelrichtung sichergestellt, so daß die Kraft der Aufwickelfeder nicht mehr auf die Lichtbildwand in der aufgewickelten Stellung der Lichtbildwand einwirken kann.

Die der Kante 50 gegenüberliegende Kante 52 der Ausnehmung 48 ist jedoch in axialer Richtung vom Ende des Gehäuses 10 weg umgebogen, so daß in der aufgewickelten Stellung der Lichtbildleinwand bei durch die Abschlußleiste 20 beaufschlagtem Tastelement 44 gegebenenfalls mehrere Umdrehungen in Abwickelrichtung zur Lockerung der Lichtbildwand ausgeführt werden können.

Anstatt die Kante 52 umzubiegen, kann auch die Rastnase 46 in Umfangsrichtung entsprechend abgeschrägt sein, wie dies andeutungsweise aus Fig. 3 hervorgeht.

## Patentansprüche

1. Lichtbildwand mit einer unter der Kraft einer Aufwickelfeder stehenden Aufwickelrolle für die Lichtbildwand, die in einem rohrförmigen Gehäuse gelagert ist, einem mit der Aufwickelrolle drehfest verbundenen und von außen betätigbaren Drehknopf an einem Gehäuseende zum Nachspannen der ausgezogenen Lichtbildwand und mit einer Abschlußleiste an dem der Aufwickelrolle entgegengesetzten Ende der Lichtbildwand, dadurch gekennzeichnet, daß im Gehäuse (10) ein von der Abschlußleiste (20) bei voll aufgewickelter Lichtbildwand (14) gegen die Kraft einer Feder (42) beaufschlagtes Tastelement (44) radial verschiebbar gelagert ist, daß ein durch das Tastelement (44) verschiebbares Rastelement (46) vorgesehen ist und daß mit dem Rastelement (46) bei Beaufschlagung des Tastelements (44) ein mit dem Drehknopf (26) drehfest verbundenes Gegenrastelement (48) zur Arretierung der Aufwickelrolle (12) in Aufwickelrichtung zusammenwirkt.

2. Lichtbildwand nach Anspruch 1, wobei der Drehknopf (26) starr mit einem innerhalb des Gehäuses (10) befindlichen Flansch (34) verbunden, axial verschiebbar und über axial ineinandergreifende Arretierungselemente (28, 30) mit dem Gehäuse (10) in Drehrichtung verriegelbar ist und ferner von einer Feder (32) vom Gehäuseende weg aus dem Verriegelungseingriff gedrückt wird, dadurch gekennzeichnet, daß das Rastelement eine Rastnase (46) ist, die bei unbeaufschlagtem Tastelement (44) sich radial außerhalb des Umfangs des Flansches (34) und bei Beaufschlagung des Tastelements sich radial innerhalb des Umfangs des Flansches (34) befindet, daß das Gegenrastelement eine die Rastnase (46) bei Arretierung aufnehmende radiale Ausnehmung (48) am Umfang des Flansches ist, der bei axial nicht-beaufschlagtem Drehknopf (26) in der radialen Verschiebungsstrecke der Rastnase (46) liegt, daß die Rastnase und/oder Flansch (34) für ein Vorbeiführen der Rastnase auf der der Aufwickelrolle abgewandten Außenseite des Flansches bei Beaufschlagung des Tastelements durch die Abschlußleiste (20) in all den Drehstellungen des Flansches (34), in denen die Ausnehmung (48) nicht in der Verschiebungsstrecke der Rastnase (46) liegt, radial abgeschrägt sind und daß entweder die Rastnase auf der beim Aufwickeln mit der einen Kante der Ausnehmung in Anlage kommenden Seite oder die beim Abwickeln mit der Rastnase in Anlage kommende Kante (52) der Ausnehmung (48) in Umfangsrichtung für eine Drehbewegung entgegen der Aufwickelrichtung abgeschrägt sind.

3. Lichtbildwand nach Anspruch 2, dadurch gekennzeichnet, daß ein Schieber (36) auf der Innenseite des den Drehknopf (26) aufweisenden axialen Gehäuseendes radial verschiebbar geführt ist und an einem Ende das Tastelement (44) und am anderen Ende einen Schenkel (40) aufweist, der durch die das Tastelement beaufschlagende Feder beaufschlagt wird, wobei die Rastnase (46) auf der Seite des Tastelements (44) am Schieber vorgesehen ist.

4. Lichtbildwand nach einem der Ansprüche 1 bis 3, dadurch gekennzeichnet, daß am rohrförmigen Gehäuse (10) eine Verriegelungseinrichtung (22, 24) zum Arretieren der Abschlußleiste (20) am Gehäuse bei aufgewickelter Lichtbildwand vorgesehen ist.

## Claims

1. Projection screen, having a winding-up roll for the projection screen, which roll is subject to the force of a winding-up spring and is mounted in a tubular housing, a rotary knob, which is joined to the winding-up roll secure against rotation and can be actuated from outside, on one end of the housing for retightening the drownout projection screen, and a closing strip on the projection screen end remote from the winding-up roll, characterised in that a key element (44) which is prestressed by the closing strip (20) against the force of a spring (42), when the projection screen (14) is fully wound up, is mounted radially displaceably in the housing (10), in that a detent element (46) displaceable by the key element (44) is provided, and in that a counter-detent element (48), joined secure against rotation with the rotary knob (26), cooperates with the detent element (46) in the winding-up direction, when the key element (44) is actuated, in order to lock the winding-up roll (12).

2. Projection screen according to claim 1, in which the rotary knob (26) is rigidly joined to a flange (34) located within the housing (10), is axially displaceable and can be locked to the housing (10) in the direction of rotation by means of locking elements (28, 30) mutually engaging axially and is also forced by a spring (32) away from the housing end and out of the locking engagement, characterised in that the detent element is a detent nose (46) which, with the key element (44) not actuated, is located radially outside the periphery of the flange (34) and, with the key element actuated, is located radially inside the periphery of the flange (34), in that the counter-detent element is a radial recess (46), receiving the detent nose (46) on locking, on the periphery of the flange which, when the rotary knob (26) is not axially actuated, is located on the radial displacement line of the detent nose (46), in that the detent nose and/or flange (34) is radially bevelled for taking the detent nose past the outside of the flange, facing away from the winding-up roll, when the key element is actuated by the closing strip (20), in all those rotary positions of the flange (34) in which the recess (48) is not located on the displacement line of the detent nose (46), and in that either the detent nose, on the side coming into contact with one edge of the recess during winding-up, or that edge (52) of the recess (48) which comes into contact with the detent nose on unwinding, is bevelled in the peripheral direction for a rotary movement in the direction opposite to that of winding-up.

3. Projection screen according to claim 1 or 2, characterised in that a slide (36) is guided for radial displacement on the inside of the axial housing end carrying the rotary knob (26) and has the key element (44) on one end and, on the other end, an arm (40) which is subject to the spring acting on the key element, the detent nose (46) being provided in the side of the key element (44) next to the slide.

4. Projection screen according to one of claims 1 to 3, characterised in that a locking device (22, 24) for locking the closing strip (20) on the housing, when the projection screen is wound up, is provided on the tubular housing (10).

**Revendications**

1. Ecran de projection comprenant une bobine d'enroulement pour l'écran, qui est soumise à la force d'un ressort d'enroulement et est supportée dans un corps tubulaire, un bouton tournant, qui est relié de manière fixe à la bobine d'enroulement de façon à ne pas pouvoir pivoter par rapport à elle, est actionnable de l'extérieur et est situé sur une extrémité du corps pour le réglage de la tension de l'écran de projection étendu, et une baguette terminale sur l'extrémité de l'écran de projection qui est opposée à la bobine d'enroulement, caractérisé en ce que, dans le corps (10), un élément palpeur (44), qui est sollicité à l'encontre de la force d'un ressort (42) par la baguette terminale (20), lorsque l'écran de projection (14) est totalement enroulé, et qui est supporté de manière radialement déplaçable, en ce qu'un élément d'enclenchement (46) déplaçable par l'élément palpeur (44) est prévu et en ce qu'un contre-élément d'enclenchement (48) relié de manière fixe au bouton tournant (26) de manière à ne pas pouvoir pivoter par rapport à lui coopère avec l'élément d'enclenchement (46), lors d'une sollicitation de l'élément palpeur (44), pour l'arrêt de la bobine d'enroulement (12) dans le sens d'enroulement.

2. Ecran de projection suivant la revendication 1, dans lequel le bouton tournant (26) est relié de manière rigide à une bride (34) située à l'intérieur du corps (10), est déplaçable axialement, peut être verrouillé avec le corps (10) dans le sens de rotation par l'intermédiaire d'éléments d'arrêt (28, 30) entrant en prise axialement et est en outre poussé par un ressort (32) à l'écart de l'extrémité du corps, en dehors de la position de prise de verrouillage, caractérisé en ce que l'élément d'enclenchement est une saillie d'enclenchement (46), qui, lorsque l'élément palpeur (44) n'est pas sollicité, se trouve radialement à l'extérieur de la périphérie de la bride (34) et, lorsque l'élément palpeur est sollicité, se trouve radialement à l'intérieur de la périphérie de la bride (34), en ce que le contre-élément d'enclenchement est un évidement radial (48) qui reçoit la saillie d'enclenchement (46) lors de l'arrêt et est situé sur la périphérie de la bride, qui se trouve, lorsque le bouton tournant (26) n'est pas sollicité axialement, dans la course de déplacement radiale de la saillie d'enclenchement (46), en ce que la saillie d'enclenchement et/ou la bride (34) sont biseautées radialement pour un défilement de la saillie d'enclenchement sur la face externe, opposée à la bobine d'enroulement, de la bride lorsque l'élément palpeur est sollicité par la baguette terminale (20), dans toutes les positions de rotation de la bride (34) dans lesquelles l'évidement (48) ne se trouve pas dans la course de déplacement de la saillie d'enclenchement (46) et en ce que, soit la saillie d'enclenchement est biseautée du côté venant en appui sur une des arêtes de l'évidement, lors de l'enroulement, soit l'arête (52) de l'évidement (48) qui vient en appui avec la saillie d'enclenchement lors du déroulement est biseautée dans le sens périphérique pour en mouvement de rotation à l'encontre du sens d'enroulement.

3. Ecran de projection suivant la revendication 2, caractérisé en ce qu'un coulisseau (36) est guidé de manière radialement déplaçable du côté interne de l'extrémité axiale du corps qui présente le bouton tournant (26) et en ce qu'à une extrémité il présent l'élément palpeur (44) et à l'autre extrémité une aile (40) qui est sollicitée par le ressort qui sollicite l'élément palpeur, la saillie d'enclenchement (46) étant prévue sur le coulisseau du côté de l'élément palpeur (44).

4. Ecran de projection suivant l'une des revendications 1 à 3, caractérisé en ce que, sur le corps tubulaire (10), un dispositif de verrouillage (22, 24) est prévu pour l'arrêt de la baguette terminale (20) sur le corps lorsque l'écran de projection est enroulé.

Fig.1

Fig. 2

0 067 280

Fig.4

Fig. 3

9

Fig. 5

Fig. 6